# EUROPEAN PATENT APPLICATION

(11) **EP 2 955 129 A1**
(43) Date of publication of application: **16.12.2015**
(21) Application number: 14748651.8
(22) Date of filing: 04.02.2014
(51) Int. Cl.: B65D 81/26, B65D 81/20

(54) **PACKAGING UNIT FOR OXYGEN-ABSORBENT MULTILAYER ARTICLE, AND STORAGE METHOD**

(30) Priority: 05.02.2013 JP 2013020545
(71) Applicant: Mitsubishi Gas Chemical Company, Inc., Tokyo 100-8324 (JP)
(72) Inventor: KAGIMOTO, Kouta, Tokyo 125-8601 (JP); YOKOSE, Emiko, Tokyo 125-8601 (JP); ITOH, Takayoshi, Tokyo 125-8601 (JP); WAKABAYASHI, Jyun, Tokyo 125-8601 (JP)
(74) Representative: Hoffmann Eitle
(86) International application number: PCT/JP2014/052557
(87) International publication number: WO 2014/123116

(57) **Abstract**

There are provided a packaged article and a storage method that can maintain the oxygen absorption performance of an oxygen absorbing multilayer body containing an easily oxidizable thermoplastic resin and a transition metal catalyst during long-term storage, and the like. The packaged article of an oxygen absorbing multilayer body of the present invention is obtained by hermetically sealing in a gas barrier container (A) an oxygen absorbing multilayer body comprising at least two layers, an isolation layer comprising a thermoplastic resin and an oxygen absorption layer comprising an oxygen absorbing resin composition comprising an easily oxidizable thermoplastic resin and a transition metal catalyst, and (B) a gas having a carbon dioxide concentration of 0.1 to 100% by volume.

## Description

### Technical Field

The present invention relates to a packaged article in which: an oxygen absorbing multilayer body containing an easily oxidizable thermoplastic resin and a transition metal catalyst; and a gas containing carbon dioxide, are hermetically sealed together in a gas barrier container, and a method for storing the above oxygen absorbing multilayer body.

### Background Art

For the purpose of preventing the oxygen oxidation of various articles that are easily deteriorated or degraded under the influence of oxygen, typified by foods, drinks, medicines, medical supplies, cosmetics, metal products, and electronic products, and storing them for a long period, oxygen absorbers for removing oxygen in packaging containers or packaging bags housing these are used.

In recent years, regarding film-like oxygen absorbing multilayer bodies, which are more easily handled, have a wide range of application, and have an extremely small possibility of being accidentally eaten, many proposals have been made for their oxygen absorbing compositions and layer configurations. An oxygen absorbing multilayer body exhibits an oxygen absorption function by itself reacting with oxygen. Therefore, when this type of oxygen absorbing multilayer body is left in the presence of oxygen, oxidation proceeds spontaneously, and therefore, the oxygen absorption performance decreases over time. Therefore, generally, it is necessary to reduce the amount of oxygen absorbed during production, distribution, processing, and storage as much as possible, and particularly, this is necessary during the long-term storage of the oxygen absorbing multilayer body. As the method for storing an oxygen absorbing multilayer body, a method of introducing an oxygen absorber into a gas barrier container in which an oxygen absorbing multilayer body is stored, a method of creating a reduced pressure state or a vacuum in the gas barrier container, or a method of gas replacement with an inert gas is known.

For example, Patent Literature 1 discloses a packaging body of an oxygen absorbing film that can be stably distributed and stored. In this packaging body of an oxygen absorbing film, in a space in the winding core of a film-wound body housed in an exterior bag having oxygen barrier properties, a filling body filling the space is disposed to decrease the amount of oxygen that can be absorbed by the oxygen absorbing film, present in the exterior bag, to make long-term storage easy.

### Citation List

### Patent Literature

Patent Literature 1: Japanese Patent Laid-Open No. 2011-235915

### Summary of Invention

### Technical Problem

However, the following problem has become clear: when the method of Patent Literature 1 is adapted to an oxygen absorbing multilayer body containing an easily oxidizable thermoplastic resin and a transition metal catalyst, the oxygen absorption function decreases significantly during a long-term storage period at normal temperature or at high temperature.

The present invention has been made in order to solve the above problem, and it is an object of the present invention to provide a packaged article of an oxygen absorbing multilayer body containing an easily oxidizable thermoplastic resin and a transition metal catalyst that can suppress the degradation of oxygen absorption performance even if stored at normal temperature or high temperature for a long period, and a method for storing an oxygen absorbing multilayer body.

### Solution to Problem

The present inventors have studied diligently and as a result found that in the storage of an oxygen absorbing multilayer body containing an easily oxidizable thermoplastic resin and a transition metal catalyst, a decrease in performance during long-term storage can be suppressed by allowing carbon dioxide to coexist, leading to the present invention.

Specifically, the present invention provides the following <1> to <14>:
<1> A packaged article of an oxygen absorbing multilayer body in which (A) an oxygen absorbing multilayer body comprising at least two layers of: an isolation layer comprising a thermoplastic resin; and an oxygen absorption layer comprising an oxygen absorbing resin composition comprising an easily oxidizable thermoplastic resin and a transition metal catalyst, and (B) a gas having a carbon dioxide concentration of 0.1 to 100% by volume are hermetically sealed in a gas barrier container.
<2> The packaged article of the oxygen absorbing multilayer body according to the above <1>, wherein carbon dioxide concentration in the gas barrier container is 1 to 100% by volume.
<3> The packaged article of the oxygen absorbing multilayer body according to the above <1> or <2>, wherein oxygen concentration in the gas barrier container is 0 to 1% by volume.
<4> The packaged article of the oxygen absorbing multilayer body according to any one of the above <1> to <3> comprising an oxygen absorber in the gas barrier container.
<5> The packaged article of the oxygen absorbing multilayer body according to the above <4>, wherein the oxygen absorber is a carbon dioxide generating oxygen absorber.
<6> The packaged article of the oxygen absorbing multilayer body according to any one of the above <1> to <5>, wherein the oxygen absorbing multilayer body starts oxygen absorption by irradiation with at least one type of energy ray selected from the group consisting of γ rays, electron beams, and ultraviolet rays.
<7> The packaged article of the oxygen absorbing multilayer body according to any one of the above <1> to <6>, wherein the easily oxidizable thermoplastic resin is a thermoplastic resin having at least one selected from the group consisting of a carbon-carbon double bond, an allylic carbon, and a phenyl group.
<8> The packaged article of the oxygen absorbing multilayer body according to any one of the above <1> to <7> comprising an oxygen indicator in the gas barrier container.
<9> A method for storing an oxygen absorbing multilayer body comprising at least two layers of: an isolation layer comprising a thermoplastic resin; and an oxygen absorption layer comprising an oxygen absorbing resin composition comprising an easily oxidizable thermoplastic resin and a transition metal catalyst, the method comprising:
   hermetically sealing the multilayer body in a gas barrier container; and setting carbon dioxide concentration in the gas barrier container to 0.1 to 100% by volume.
<10> The method for storing the oxygen absorbing multilayer body according to the above <9>, wherein the carbon dioxide concentration in the gas barrier container is 1 to 100% by volume.
<11> The method for storing the oxygen absorbing multilayer body according to the above <9> or <10>, wherein oxygen concentration in the gas barrier container is 0 to 1% by volume.
<12> The method for storing the oxygen absorbing multilayer body according to any one of the above <9> to <11>, wherein the setting of the carbon dioxide concentration in the gas barrier container to 0.1 to 100% by volume is conducted by hermetically sealing an oxygen absorber in the gas barrier container.
<13> The method for storing the oxygen absorbing multilayer body according to the above <12>, wherein the oxygen absorber is a carbon dioxide generating oxygen absorber.
<14> The method for storing the oxygen absorbing multilayer body according to any one of the above <9> to <13>, wherein storage temperature is 40°C or less.

### Advantageous Effect of Invention

According to the packaged article of an oxygen absorbing multilayer body and the method for storing an oxygen absorbing multilayer body according to the present invention, the excellent oxygen absorption performance of the oxygen absorbing multilayer body can be maintained for a long period by allowing carbon dioxide to coexist.

### Description of Embodiment

An embodiment of the present invention will be described below. The following embodiment is an illustration for explaining the present invention, and the present invention is not limited to only the embodiment.

### <Oxygen Absorbing Multilayer Body>

An oxygen absorbing multilayer body in the present embodiment is a laminate of an isolation layer comprising a thermoplastic resin and an oxygen absorption layer comprising an oxygen absorbing resin composition comprising an easily oxidizable thermoplastic resin and a transition metal catalyst, and it comprises at least two layers, an isolation layer and an oxygen absorption layer. Further, in addition to the above layers, any layer can also be laminated (interposed) at any position in a range that does not impair the desired performance targeted by the oxygen absorbing multilayer body in the present embodiment. The above oxygen absorbing multilayer body can be produced by a known method. Further, an inorganic metal compound that absorbs an acidic gas or a basic gas, and a deodorant such as silica or zeolite can also be appropriately added to any layer of the above oxygen absorbing multilayer body.

### (Isolation Layer)

The isolation layer constituting the oxygen absorbing multilayer body in the present embodiment plays a role of isolating the oxygen absorption layer from a housed article and plays a role as a sealant. In addition, the isolation layer plays has an efficient oxygen permeability so as not to hinder rapid oxygen absorption by the easily oxidizable thermoplastic resin contained in the oxygen absorbing resin composition constituting the oxygen absorption layer.

The isolation layer in the present embodiment has an oxygen permeability of 1000 mL/ (m²·day·atm) or more, preferably 3000 mL/ (m²·day·atm) or more, and more preferably 5000 mL/ (m²·day·atm) or more as measured under the conditions of 23°C and a relative humidity of 60%. When the oxygen permeability is the above preferred value or more, the oxygen absorbing rate of the oxygen absorption layer can be more increased compared with a case where the oxygen permeability is not the above preferred value or more.

Typical examples of the thermoplastic resin used in the isolation layer include polyolefin resins such as polyethylene, ethylene-α-olefin copolymers, polypropylene, propylene-ethylene random copolymers, propylene-ethylene block copolymers, and ethylene-cyclic olefin copolymers; ethylene-based copolymers such as ethylene-(meth)acrylic acid copolymers, ethylene-methyl (meth)acrylate, various ionically crosslinked products of ethylene-(meth)acrylic acid copolymers, and ethylene-vinyl acetate copolymers;
synthetic rubber-based resins such as polybutadiene, polyisoprene, and styrene-butadiene copolymers and hydrogenated resins thereof; soft polyvinyl chloride; polystyrene; polymethylpentene; silicone resins; and copolymers of polysiloxanes and other resins. One of these can be used alone, or two or more of these can be used in combination.

The thickness of the isolation layer is not particularly limited and can be appropriately set. Considering the balance between the strength and oxygen absorption rate of the multilayer body, the thickness of the isolation layer is preferably 1 to 100 µm, more preferably 1 to 50 µm, and particularly preferably 1 to 20 µm.

### (Oxygen Absorption Layer)

The oxygen absorption layer constituting the oxygen absorbing multilayer body in the present embodiment contains a thermoplastic resin composition comprising an easily oxidizable thermoplastic resin and a transition metal catalyst.

The thickness of the oxygen absorption layer is not particularly limited and can be appropriately set. Considering the balance between flexibility as a packaging material and the oxygen absorption rate, the thickness of the oxygen absorption layer is preferably 1 to 300 µm, more preferably 5 to 200 µm, and particularly preferably 10 to 100 µm.

The easily oxidizable thermoplastic resin used in the present embodiment means a thermoplastic resin having any of a carbon-carbon double bond, an allylic carbon (a carbon adjacent to a carbon-carbon double bond), a phenyl group, an alcohol group, an ether group, an aldehyde group, a ketone group, and tertiary carbon. One of these can be used alone, or two or more of these can be used in combination. Among these, thermoplastic resins having a carbon-carbon double bond, an allylic carbon, a phenyl group, or tertiary carbon are preferred, and thermoplastic resins having a carbon-carbon double bond, an allylic carbon, or a phenyl group are more preferred.

In thermoplastic resins having a carbon-carbon double bond or an allylic carbon, the carbon-carbon double bond or the allylic carbon may be in the main chain or side chain of the polymer. Typical examples include 1,4-polybutadiene, 1,2-polybutadiene, 1,4-polyisoprene, 3,4-polyisoprene, styrene butadiene rubbers, styrene-butadiene-styrene block copolymers, styrene-isoprene-styrene block copolymers, and ethylene-methyl acrylate-cyclohexenylmethyl acrylate copolymers. Examples of the thermoplastic resins having a phenyl group include hydrogenated styrene butadiene rubbers and hydrogenated styrene isoprene rubbers. Examples of the thermoplastic resins having a tertiary carbon include polypropylene and polymethylpentene. Among these, 1,2-polybutadiene, styrene-butadiene-styrene block copolymers, and styrene-isoprene-styrene block copolymers are preferred, 1,2-polybutadiene is more preferred, and syndiotactic 1,2-polybutadiene is particularly preferred.

The transition metal catalyst in the present embodiment can be appropriately selected from known ones and used as long as it can function as a catalyst for the oxidation reaction of the easily oxidizable thermoplastic resin, and the transition metal catalyst is not particularly limited.

Specific examples of the above transition metal catalyst include organic acid salts, halides, phosphates, phosphites, hypophosphites, nitrates, sulfates, oxides, and hydroxides of transition metals. Here, examples of the transition metal contained in the transition metal catalyst include, but are not limited to, titanium, vanadium, chromium, manganese, iron, cobalt, nickel, copper, zinc, ruthenium, and rhodium. Among these, manganese, iron, cobalt, nickel, and copper are preferred. In addition, examples of the organic acid include, but are not limited to, acetic acid, propionic acid, octanoic acid, lauric acid, stearic acid, acetylacetone, dimethyldithiocarbamic acid, palmitic acid, octylic acid, neodecanoic acid, linoleic acid, tall oil acid, oleic acid, capric acid, and naphthenic acid. For the transition metal catalyst, combinations of these transition metals and organic acids are preferred, and combinations in which the transition metal is manganese, iron, cobalt, nickel, or copper, and the organic acid is at least one fatty acid selected from octylic acid, neodecanoic acid, naphthenic acid, and stearic acid are more preferred. Particularly, combinations in which the transition metal is cobalt, and the organic acid is octylic acid or neodecanoic acid are particularly preferred. One transition metal catalyst can be used alone, or two or more transition metal catalysts can be used in combination.

A thermoplastic resin different from the above-described easily oxidizable thermoplastic resin (hereinafter also simply referred to as "another thermoplastic resin") may be further blended in the oxygen absorption layer in order to increase the oxygen permeability of the oxygen absorption layer and increase the oxygen absorbing rate. When another thermoplastic resin is blended, the amount of the another thermoplastic resin blended is not particularly limited, but is preferably 10 to 1000 parts by mass, particularly preferably 50 to 500 parts by mass, based on 100 parts by mass of the easily oxidizable thermoplastic resin in terms of increasing the oxygen absorption rate. For the another thermoplastic resin blended here, those having high compatibility with the easily oxidizable thermoplastic resin, and those providing high oxygen permeability when the thermoplastic resin composition is formed into a film are preferred.

The oxygen absorbing resin composition constituting the oxygen absorption layer can be produced, for example, by mixing a resin composition comprising an easily oxidizable thermoplastic resin and a transition metal catalyst at the melting temperature of each resin or more. Alternatively, the oxygen absorbing resin composition can also be produced by mixing an easily oxidizable thermoplastic resin and a powdery transition metal catalyst at the melting temperature of the resin or more, or the like. In addition, the oxygen absorbing resin composition can also be produced by mixing a resin composition comprising a powdery transition metal catalyst or a transition metal catalyst simple body at high concentration (master batch) and an easily oxidizable resin at the melting temperature or more.

### (Form of Oxygen Absorbing Multilayer Body)

The form of the oxygen absorbing multilayer body in the present embodiment is not particularly limited. Examples of the form include a roll-like film, a bottle, a bag, and a sheet-like film.

### (Roll-Like Film)

In the present embodiment, a roll-like film means a film being in a state in which a film of the oxygen absorbing multilayer body is wound around a winding core. The length of the wound film is not particularly limited but is preferably 1 to 2000 m, more preferably 10 to 1000 m.

Examples of the material of the winding core of the above roll-like film include, but are not limited to, paper and plastics. The form of the winding core is also not limited in any way, and a rod-like tube and a hollow tube can be used.

### <Gas Containing Carbon Dioxide>

In a packaged article in the present embodiment, the above-described oxygen absorbing multilayer body and a gas containing 0.1 to 100% by volume of carbon dioxide are hermetically sealed in a gas barrier container. The carbon dioxide concentration of the gas is preferably 1 to 100% by volume, more preferably 10 to 100% by volume, further preferably 20 to 100% by volume, and particularly preferably 50 to 100% by volume. By setting the carbon dioxide concentration in the above preferred range, higher oxygen absorption performance of the oxygen absorbing multilayer body can be maintained.

In addition, in terms of suppressing a decrease in the oxygen absorption performance of the oxygen absorbing multilayer body, the oxygen concentration of the gas is preferably 0 to 1% by volume, more preferably 0 to 0.5% by volume, and further preferably 0 to 0.1% by volume. Further, a known inert gas may be contained in the gas. Examples of the inert gas include gases comprising an element in Group 18 such as nitrogen and argon.

The method for adjusting the above gas is not limited in any way. Examples of the method include a method of enclosing and hermetically sealing the oxygen absorbing multilayer body and a gas adjusted to a predetermined composition in the gas barrier container, and a method of replacing a gas comprising oxygen (for example, air) in the gas barrier container housing the oxygen absorption multilayer body with a gas comprising carbon dioxide. In the gas used for the replacement, nitrogen gas and argon gas, which are generally used for gas replacement, may be mixed and used as long as the carbon dioxide concentration and the oxygen concentration are in the above ranges.

In addition, by enclosing a ferrous oxygen absorber that can absorb oxygen in the container, together with the gas comprising carbon dioxide, the carbon dioxide concentration and oxygen concentration in the gas barrier container can also be adjusted to, for example, 1 to 100% by volume and 0 to 1% by volume, respectively. Further, also by housing an organic oxygen absorber (carbon dioxide generating oxygen absorber) that absorbs oxygen in the gas barrier container and generates carbon dioxide, in the gas barrier container together with the oxygen absorbing multilayer body, the gas composition can be adjusted in the above ranges. In the method for adjusting the gas composition using this organic oxygen absorber, the gas composition in the gas barrier container can be appropriately adjusted based on the volume and gas composition in the gas barrier container, the ability of the oxygen absorber used, and the amount of the oxygen absorber blended. One of these methods can be used alone, or two or more of these methods can be used in combination.

### <Gas Barrier Container>

The size and shape of the gas barrier container in the present embodiment are not limited as long as it can house the oxygen absorbing multilayer body. Examples of the shape include a cylindrical drum and bag shapes such as a pillow bag and a three-side-sealed bag. In addition, the material of the gas barrier container is also not particularly limited, and known gas barrier substances can be used. For example, uniaxially or biaxially stretched films of polyesters such as PET or uniaxially or biaxially stretched films of polyamides such as MXD6; vinyl alcohol copolymer-based films; aluminum foil; metal-deposited plastic films in which a thin film of a metal such as aluminum is deposited on a stretched film such as a uniaxially or biaxially stretched PET film, polyamide film, or polyolefinic film; inorganic compound-deposited plastic films in which a thin film of an inorganic compound such as aluminum oxide or silicon oxide is provided on a stretched film such as a uniaxially or biaxially stretched PET film, polyamide film, or polyolefinic film; and barrier layer-coated plastic films in which the above plastic film is coated with an appropriate amount of a mixture of a vinylidene chloride resin, an inorganic layered compound, and a water-soluble polymer such as polyvinyl alcohol, or the like can be preferably used.

Further, these materials constituting the gas barrier layer can be used alone as a single layer or can be used in combination as a multilayer. Further, for the material constituting the gas barrier layer, those that can block ultraviolet rays are preferred.

### (Oxygen Indicator and Carbon Dioxide Indicator)

An oxygen indicator and/or a carbon dioxide indicator can be provided in the packaged article in the present embodiment. The oxygen indicator indicates oxygen concentration by a color tone or the like, and, for example, the oxygen detecting agent AGELESS EYE manufactured by Mitsubishi Gas Chemical Company, Inc. can be used. Similarly, the carbon dioxide indicator indicates carbon dioxide concentration by a color tone or the like.

The oxygen indicator and/or the carbon dioxide indicator can be provided by printing. The method for printing is not particularly limited, and printing methods such as gravure printing, offset printing, letterpress printing, and screen printing; application; or the like can be applied. Specifically, an oxygen detecting agent and/or a carbon dioxide detecting agent can be applied or printed on paper, a plastic, or the like as a letter, a graphic, a picture, or the like to provide an indicator that indicates the concentration of oxygen and/or carbon dioxide in the container. In addition, an oxygen detecting agent and/or a carbon dioxide detecting agent can be applied or printed on the inside surface of the gas barrier container or on the surface of an object, for example, an oxygen absorber, in the gas barrier container as a letter, a graphic, a picture, or the like to provide an indicator that indicates the concentration of oxygen and/or carbon dioxide in the container.

### (Energy Ray)

When the absorption of oxygen is not sufficiently started even if the above oxygen absorbing multilayer body is left under an atmosphere in which oxygen is present, the above oxygen absorbing multilayer body may be irradiated with at least one type of energy ray selected from γ rays, electron beams, and ultraviolet rays to start oxygen absorption. As used herein, the irradiation of the above oxygen absorbing multilayer body with at least one type of energy ray selected from γ rays, electron beams, and ultraviolet rays is also referred to as activation.

### (γ Rays and Electron Beams)

When the above oxygen absorbing multilayer body is irradiated with a γ ray or an electron beam, it is possible to perform the above activation after hermetically sealing the above oxygen absorbing multilayer body in the gas barrier container, or it is possible to perform the above activation before hermetically sealing the above oxygen absorbing multilayer body in the gas barrier container and then hermetically seal the above oxygen absorbing multilayer body in the gas barrier container. In terms of being able to suppress a decrease in oxygen absorption performance and in terms of the efficiency of productivity, it is preferred to perform the above activation after hermetically sealing the above oxygen absorbing multilayer body in the gas barrier container.

The dose of γ ray and/or electron beam that starts the oxygen absorption of the oxygen absorbing multilayer body in the present embodiment is generally 1 to 200 kGy, preferably 1 to 150 kGy, and more preferably 5 to 100 kGy. When the dose is in the above range, the oxygen absorbing multilayer body can be more activated, and offensive odor generation, which is considered to be due to the decomposition of the resins in the oxygen absorbing multilayer body and the gas barrier container, can be more suppressed, compared with a case where the dose is not in the above range.

In the present embodiment, a γ ray and/or an electron beam can be used as described above, but a γ ray is more preferred in that uniform irradiation is possible. The source of γ ray is not particularly limited, and cobalt 60 and cesium 137 are illustrated.

### (Ultraviolet Rays)

When the above oxygen absorbing multilayer body is irradiated with ultraviolet rays, it is preferred to perform the above activation before hermetically sealing the above oxygen absorbing multilayer body in the gas barrier container and then hermetically seal the above oxygen absorbing multilayer body in the gas barrier container.

The wavelength of ultraviolet rays for irradiation for starting the oxygen absorption of the oxygen absorbing multilayer body in the present embodiment is preferably 10 to 400 nm, more preferably 200 to 380 nm. The dose is preferably 300 to 2000 mJ/cm² in terms of accumulated light at 365 nm. When the dose is in the above preferred range, the oxygen absorbing multilayer body can be activated, and the coloration and deformation of the film can be more suppressed, compared with a case where the dose is not in the above preferred range.

### Examples

The present invention will be described in more detail below using Examples and Comparative Example, but the present invention is not limited by these.

### (Catalyst Master Batch)

A cobalt octylate solution (cobalt octylate:solvent = 1:1 (mass ratio), Co content: 8% by mass) and a synthetic calcium silicate powder (average particle diameter 2 µm) were mixed at a mass ratio of 2:1 to obtain a powdery material. The powdery material and linear and short chain-branched polyethylene (hereinafter described as "LLDPE") were melted and kneaded at a mass ratio of 20:80 at 160°C using a twin-screw kneading extruder to make a catalyst master batch (Co content 1% by mass).

### (Odor Absorption Layer Master Batch)

LLDPE and silica gel (specific surface area 300 m²/g, average particle diameter 4 µm) were mixed at a mass ratio of 85:15 and melted and kneaded at 170°C using a twin-screw kneading extruder to make an odor absorption layer master batch.

### (Oxygen Absorbing Multilayer Body)

A mixed resin of LLDPE and the above odor absorption layer master batch was used as a resin for an odor absorption layer, a mixed resin of syndiotactic 1,2-polybutadiene (hereinafter described as "RB") and a styrene-isoprene-styrene block copolymer (hereinafter described as "SIS") and the above catalyst master batch was used as a resin for an oxygen absorption layer, and LLDPE was used as a resin for an isolation layer. The mixing ratio was set so that the component content in each layer was as follows:
Odor absorption layer: silica gel 5.0% by mass
Oxygen absorption layer: RB 60% by mass, SIS 10% by mass, Co atoms 0.3% by mass

The resins constituting the layers were coextruded by a T die in the order of the odor absorption layer/the oxygen absorption layer/the isolation layer so that the thicknesses of the layers were 20 µm/20 µm/10 µm, respectively, to form a film, and corona discharge treatment was performed on the odor absorption layer side to obtain a three-layer film. Next, an oxygen barrier layer comprising vinylidene chloride-coated, biaxially stretched polypropylene was adhered on the odor absorption layer side of the three-layer film obtained, by dry lamination to make an oxygen absorbing multilayer body.

### (Evaluation of Oxygen Absorption Performance)

The oxygen absorbing multilayer body was cut into a 100 mm x 100 mm piece, and the multilayer body and 240 mL of air were enclosed and hermetically sealed in a gas barrier bag made of silica-deposited polyethylene terephthalate (hereinafter described as "silica-deposited PET") and then stored at 25°C and 60% RH. After one day of storage, the oxygen concentration in the bag was measured, and the amount of oxygen absorbed was calculated. The oxygen absorbing multilayer body having an oxygen absorption performance of 0.05 mL/cm² or more after one day of storage was evaluated as acceptable.

### (Example 1)

The above oxygen absorbing multilayer body was irradiated with γ ray at a dose of 60 kGy and then cut to 200 mm x 160 mm. 10 Of these oxygen absorbing multilayer bodies and two ferrous oxygen absorbers (AGELESS ZH-100 manufactured by Mitsubishi Gas Chemical Company, Inc.) were housed in a gas barrier bag made of silica-deposited PET. The air in the above gas barrier bag was degassed, and carbon dioxide having a purity of 99.5% by volume was enclosed to replace the gas in the above gas barrier bag. Further, the above replacement operation (degassing and the enclosure of the above carbon dioxide) was performed twice. Then, 400 mL of carbon dioxide having a purity of 99.5% by volume was enclosed, and the opening of the gas barrier bag was sealed and hermetically sealed to make a packaged article of oxygen absorbing multilayer bodies.

After the packaged article was stored at room temperature for 24 hours, the carbon dioxide concentration in the gas barrier bag was measured by a gas chromatograph, and as a result, it was 91% by volume. In addition, the packaged article was stored at 25°C or 40°C, and after a lapse of a predetermined period, the oxygen absorbing multilayer bodies were removed from the gas barrier bag, and the evaluation of oxygen absorption performance was performed. The results are shown in Table 1.

### (Example 2)

A packaged article of oxygen absorbing multilayer bodies was made in the same way as in Example 1 except that two nonferrous carbon dioxide generating oxygen absorbers (AGELESS GE-100 manufactured by Mitsubishi Gas Chemical Company, Inc.) were used instead of two oxygen absorbers (AGELESS ZH-100 manufactured by Mitsubishi Gas Chemical Company, Inc.), and 400 mL of air was enclosed instead of carbon dioxide.

After the packaged article was stored at room temperature for 24 hours, the carbon dioxide concentration in the gas barrier bag was measured by a gas chromatograph, and as a result, it was 13% by volume. In addition, the packaged article was stored at 25°C or 40°C, and after a lapse of a predetermined period, the oxygen absorbing multilayer bodies were removed from the gas barrier bag, and the evaluation of oxygen absorption performance was performed. The results are shown in Table 1.

### (Comparative Example 1)

A packaged article of oxygen absorbing multilayer bodies was made in the same way as in Example 1 except that nitrogen gas was used instead of carbon dioxide. Then, the evaluation of oxygen absorption performance was performed in the same way as in Example 1. In addition, the carbon dioxide concentration in the gas barrier bag was measured as in Example 1, and as a result, it was 0.5% by volume or less. The results are shown in Table 1.

**[Table 1]**

| Storage temperature | Storage period | Amount of oxygen absorbed [ml/cm²] | | |
|---|---|---|---|---|
| | | Example 1 | Example 2 | Comparative Example 1 |
| 25°C | 1 month | 0.11 | 0.09 | 0.07 |
| | 2 months | 0.10 | 0.09 | 0.03 |
| | 3 months | 0.09 | 0.08 | 0.01 |
| 40°C | 2 weeks | 0.11 | 0.08 | 0.01 |
| | 1 month | 0.10 | 0.10 | 0.01 |
| | 2 months | 0.06 | 0.07 | 0.01 |

From Examples 1 to 2, it was ascertained that when the oxygen absorbing multilayer bodies were stored with carbon dioxide allowed to coexist, the oxygen absorption performance was maintained for a long period even if they were stored at a normal temperature of 25°C or a relatively high temperature of 40°C.

### Industrial Applicability

The oxygen absorbing multilayer body of the present invention can be used in the whole or part of an oxygen absorbing container. The use of the oxygen absorbing multilayer body of the present invention is not limited, and it exhibits highly practical oxygen absorption performance in the field of the storage and quality preservation of foods, drinks, medicines, medical supplies, cosmetics, metal products, electronic products, and the like.

This application claims priority from Japanese Patent Application No. 2013-020545 filed with the Japan Patent Office on February 5, 2013, the content of which is incorporated herein by reference.

## Claims

1. A packaged article of an oxygen absorbing multilayer body in which
(A) an oxygen absorbing multilayer body comprising at least two layers of:
an isolation layer comprising a thermoplastic resin; and
an oxygen absorption layer comprising an oxygen absorbing resin composition comprising an easily oxidizable thermoplastic resin and a transition metal catalyst, and
(B) a gas having a carbon dioxide concentration of 0.1 to 100% by volume
are hermetically sealed in a gas barrier container.

2. The packaged article of the oxygen absorbing multilayer body according to claim 1, wherein the carbon dioxide concentration in the gas barrier container is 1 to 100% by volume.

3. The packaged article of the oxygen absorbing multilayer body according to claim 1 or 2, wherein an oxygen concentration in the gas barrier container is 0 to 1% by volume.

4. The packaged article of the oxygen absorbing multilayer body according to any one of claims 1 to 3, wherein an oxygen absorber is hermetically sealed in the gas barrier container.

5. The packaged article of the oxygen absorbing multilayer body according to claim 4, wherein the oxygen absorber is a carbon dioxide generating oxygen absorber.

6. The packaged article of the oxygen absorbing multilayer body according to any one of claims 1 to 5, wherein the oxygen absorbing multilayer body starts oxygen absorption by irradiation with at least one type of energy ray selected from the group consisting of γ rays, electron beams, and ultraviolet rays.

7. The packaged article of the oxygen absorbing multilayer body according to any one of claims 1 to 6, wherein the easily oxidizable thermoplastic resin is a thermoplastic resin having at least one selected from the group consisting of a carbon-carbon double bond, an allylic carbon, and a phenyl group.

8. The packaged article of the oxygen absorbing multilayer body according to any one of claims 1 to 7 comprising an oxygen indicator and/or a carbon dioxide indicator in the gas barrier container.

9. A method for storing an oxygen absorbing multilayer body comprising at least two layers of: an isolation layer comprising a thermoplastic resin; and an oxygen absorption layer comprising an oxygen absorbing resin composition comprising an easily oxidizable thermoplastic resin and a transition metal catalyst,
the method comprising:
hermetically sealing the multilayer body in a gas barrier container; and
setting carbon dioxide concentration in the gas barrier container to 0.1 to 100% by volume.

10. The method for storing the oxygen absorbing multilayer body according to claim 9, wherein the carbon dioxide concentration in the gas barrier container is 1 to 100% by volume.

11. The method for storing the oxygen absorbing multilayer body according to claim 9 or 10, wherein an oxygen concentration in the gas barrier container is 0 to 1% by volume.

12. The method for storing the oxygen absorbing multilayer body according to any one of claims 9 to 11, wherein the setting of the carbon dioxide concentration in the gas barrier container to 0.1 to 100% by volume is conducted by hermetically sealing an oxygen absorber in the gas barrier container.

13. The method for storing the oxygen absorbing multilayer body according to claim 12, wherein the oxygen absorber is a carbon dioxide generating oxygen absorber.

14. The method for storing the oxygen absorbing multilayer body according to any one of claims 9 to 13, wherein storage temperature is 40°C or less.
